# EUROPEAN PATENT SPECIFICATION

(11) **EP 0 978 160 B1**
(45) Date of publication and mention of the grant of the patent: **31.07.2002**
(21) Application number: 98916681.4
(22) Date of filing: 20.04.1998
(51) Int. Cl.: H02K 15/12

(54) **A METHOD FOR APPLYING AN INSULATION TO TURNS OF A ROTOR POLE COIL OF A LARGE SYNCHRONOUS MACHINE, AND POLE COIL INSULATED BY THIS METHOD**
VERFAHREN ZUM AUFBRINGEN EINER ISOLIERUNG AUF DIE WINDUNGEN EINER LÄUFERPOLWICKLUNG EINER GROSSEN SYNCHRONMASCHINE, UND NACH DIESEM VERFAHREN ISOLIERTE POLWICKLUNG
PROCEDE POUR APPLIQUER UNE ISOLATION AUX SPIRES D'UNE BOBINE D'UN POLE D'INDUIT D'UNE GRANDE MACHINE SYNCHRONE, ET BOBINE DU POLE AINSI ISOLEE

(30) Priority: 22.04.1997 BR 9701880
(43) Date of publication of application: 09.02.2000
(73) Proprietor: Siemens Ltda, CEP-05110-901 Sao Paulo, SP (BR)
(72) Inventor: SEMMELMANN, Wolfgang, CEP-05122-080 Sao Paulo, SP (BR); LOCATTO MAZOLLA, Ernesto, CEP-01240-000 Sao Paulo, SP (BR); BENEDETTI, Joao, Carlos, CEP-06086-090 Sao Paulo, SP (BR); HILDINGER, Thomas, CEP-04710-140 Sao Paulo, SP (BR)
(74) Representative: Darby, David Thomas
(86) International application number: BR9800017
(87) International publication number: WO9848501

(56) References cited:
- WO-A-97/07585
- US-A- 4 229 242
- US-A- 4 283 840
- US-A- 4 682 410
- US-A- 4 792 462
- US-A- 5 316 801
- PATENT ABSTRACTS OF JAPAN vol. 012, no. 367 (E-664), 30 September 1988 & JP 63 117641 A (TOSHIBA CORP), 21 May 1988
- PATENT ABSTRACTS OF JAPAN vol. 016, no. 347 (E-1240), 27 July 1992 & JP 04 106812 A (TOSHIBA CORP), 8 April 1992
- PATENT ABSTRACTS OF JAPAN vol. 011, no. 055 (E-481), 20 February 1987 & JP 61 214749 A (TOSHIBA CORP), 24 September 1986
- PATENT ABSTRACTS OF JAPAN vol. 013, no. 292 (E-782), 6 July 1989 & JP 01 072508 A (TOKAI UNIV;OTHERS: 01), 17 March 1989

## Description

The present invention is suitable for use in the field of electric machines having salient poles, such as synchronous motors or generators (synchronous machines), which transform electric energy into mechanical energy and vice-versa. In the case of generators, the respective drive is effected by hydraulic or vapor turbines.

In particular, this invention refers to an improved method of insulating turns of coils of synchronous machines having salient poles, and to the resulting product.

The stator of synchronous machines of the prior art is formed by a plurality of metal plates, being usually provided with three-phase windings, which receive the electric current, in the case of a motor, or in which the electric charge is developed, in the case of a generator.

The rotor of a synchronous machine has hubs at which respective poles are fixed. Each of these poles has a coil which, in the case of large-size machines, has a single layer of windings and is manufactured from the solder of copper bars having an adequate length, or still from the fold of copper strips, which form turns where the magnetic field of the machine is developed. These turns are fed with a direct current, generating a continuous magnetic field which turns in synchrony with the rotor.

The rotation of the synchronous machine depends on the frequency of the network and the number of poles of the field, as expressed in the following equality: n = 60 x f/p, wherein "f" is the frequency (in Hz), "p" is the number of pairs of poles, and "n" is the rotation (in rpm).

Although the electric insulation of the turns of these pole coils typically includes not only a main insulation, but also an additional insulation, the maintenance of the insulation between the turns made in accordance with the prior art is problematic.

Thus, the respective synchronous machines have to be turned off for repairs, or at least some of their pole coils have to be disconnected, for the purpose of eliminating short-circuits between the turns and with the ground.

Such short-circuits occur principally because of unwanted contacts caused by moisture or dirt, or else due to the fact that the main or additional insulation has peeled or is insufficiently glued.

According to the techniques known today, attempts are made to overcome these drawbacks by making the main or additional insulation of the turns with layers of "Nomex" paper, either overlapped or glued to each other. The pole coil thus formed is then painted with insulating varnish.

However, the insulating properties of said varnish are not sufficient to avoid the problems mentioned above. In addition, these steps can only be effected manually, which makes the automation of the method impossible.

One of the documents known from the state of the art is document US 4.682.410, which describes a process of making a dynamo electric machine. This method comprises applying insulation powder to a expanded spiral loop. Further, this insulating layer is cured to form a insulating layer on said spirals. This method does not, however, provide a sufficient insulation for the turns of poles of large sized machines, the latter having spirals that are at least ten times larger than the spirals of an ordinary machine, and are also submitted to big acceleration forces.

US 4 229 242 A discloses a method for insulating the rotor coils of a large electrical machine by wrapping each turn with a tape impregnated with a thermoplastic or thermo setting resin.

In view of the above considerations, the main objective of this invention is to provide a method for applying insulation to turns of poles of large sized synchronous machines, which is made in a continuous way and so that the final insulation will not be sensitive to moisture or dirt.

A further objective of the invention is to provide a method for applying insulation to turns of poles which can be automated.

According to the invention, these objectives are achieved by a method for applying insulation to turns of a rotor pole coil of a large sized synchronous machine, such as a generator driven by hydraulic or vapour turbines, characterized by including a step of applying an insulating powdered varnish onto the turns, the insulation varnish being able to support temperatures up to 155 °C.

This invention further relates to a rotor pole coil of such a large sized synchronous machine, characterized in that it comprises turns coated with an originally powdered insulation by the method of the invention.

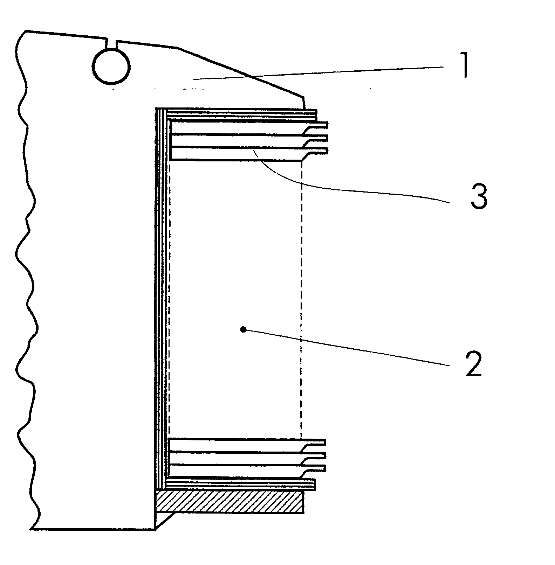

The present invention will be better understood from the following description given by way of example, with reference to figure 1, which is a cross-sectional view of a pole of a synchronous machine.

As known from the prior art, a pole coil 2 of a large-size machine is manufactured from the solder of copper bars having an adequate length, or else from the fold of copper strips.

Specifically according to the method of this invention, the individual turns 3 of the coils 2 are then spaced away from each other by an appropriate device (not shown). According to a preferred embodiment, the turns 3 rest, on the outer side, against a separating comb made of an insulating material.

Four coil combs are used, positioned at the longitudinal ends, opening the vertical or horizontal turns. The turns 3 are maintained at a distance preferably of 3 centimeters from each other by this separating comb.

Prior to the use, the separating comb is advantageously coated with a demolding material (for example, silicone oil), thus favoring the cleaning and disassembling process, and enabling it to be reused.

Then the coil 2 and separating comb assembly is suspended with a hoist inside an electrostatic painting cabin (not shown), thus enabling the application of the powdered varnish throughout the surface of the turns 3, except for the contact points of the separating comb.

In this way, the turns 3 are coated with a powdered varnish having electric and thermal characteristics that are described below, the varnish being then hardened by raising the temperature, either by introducing the coil 2 into an oven (not shown), or by passing an electric current through the turns 3, thus generating heat by the Joule effect.

Then said separating comb is spaced away from the coil 2, which is then coated with varnish and maybe glue at the points where the comb contacted the turns 3.

Finally, the coil 2 is ready to be fit onto the pole 1 of the synchronous machine.

As far as the powdered varnish is concerned, according to the invention, on the turns 3 one should use a product which resists temperatures of up to 155° C and which has an insulating capacity of 25 kV/mm, so that a thin layer of varnish will be sufficient for a potential difference of 250V between the turns. Of course, by applying a thicker layer of powdered varnish, this type of insulation can withstand potential differences at the turns ranging from 1,500V to 5,000V, thus enabling it to be used as a main insulation between the windings and the pole body itself which is grounded.

One should bear in mind that the above description of the method and the product resulting therefrom is merely explanatory, the scope of the invention being defined exclusively by the accompanying claims.

## Claims

1. A method for applying an insulation to turns (3) of a rotor pole (1) coil (2) of a large sized synchronous machine, such as a generator driven by hydraulic or vapor turbines, **characterized in that** it includes a step of applying a powdered insulating varnish onto the turns (3), the insulation varnish being able to support temperatures up to 155 °C.

2. A method according to claim 1, **characterized in that** the turns (3) are spaced apart prior to the application of the powdered insulating varnish.

3. A method according to claim 2, **characterized in that** the turns (3) are maintained at a distance of about 3 cm from each other by a separating comb.

4. A method according to claim 1, **characterized in that** it further includes a step of heating the turns (3) coated with said insulating varnish, in order to harden it.

5. A method according to claim 4, **characterized in that** the pole coil (2) is introduced into a heater.

6. A method according to claim 4, **characterized in that** the pole coil (2) is heated by passing an electric current through its turns (3).

7. A rotor pole (1) coil (2) of a large sized synchronous machine, such as a generator driven by hydraulic or vapor turbines, **characterized by** comprising turns (3) insulated by the method defined in any one of claims 1 to 6.

## Patentansprüche

1. Verfahren zum Aufbringen einer Isolierung auf Windungen (3) einer Läuferpolwicklung (1, 2) einer großen Synchronmaschine, insbesondere eines von einer Wasserturbine oder Dampfturbine angetriebenen Generators, **dadurch gekennzeichnet, dass** es einen Verfahrensschritt enthält, bei dem ein pulverförmiger isolierender Lack auf den Windungen (3) angebracht wird, wobei der isolierende Lack Temperaturen hinauf bis 155 °C aushält.

2. Verfahren nach Patentanspruch 1, **dadurch gekennzeichnet, dass** vor dem Anbringen des pulverförmigen Isolierlackes die Windungen (3) beabstandet werden.

3. Verfahren nach Patentanspruch 2, **dadurch gekennzeichnet, dass** die Windungen (3) in einem Abstand von rund 3 cm zueinander mittels eines separierenden Kammes gehalten werden.

4. Verfahren nach Patentanspruch 1, **dadurch gekennzeichnet, dass** es zusätzlich einen Verfahrensschritt enthält, bei dem die mit dem Isolierlack beschichteten Windungen (3) zum Aushärten des Isolierlackes erhitzt werden.

5. Verfahren nach Patentanspruch 4, **dadurch gekennzeichnet, dass** die Polwicklung (2) in einen Ofen gebracht wird.

6. Verfahren nach Patentanspruch 4, **dadurch gekennzeichnet, dass** die Polwicklung (2) mittels eines durch seine Windungen (3) fließenden elektrischen Stromes erhitzt wird.

7. Läuferpolwicklung (1, 2) einer großen Synchronmaschine, insbesondere eines von einer Wasserturbine oder Dampfturbine angetriebenen Generators, **dadurch gekennzeichnet, dass** sie Windungen (3) enthält, die nach einem Verfahren gemäß einem der Patentansprüche 1 bis 6 isoliert sind.

## Revendications

1. Procédé pour appliquer une isolation à des spires (3) d'une bobine (2) de pôle (1)
de rotor d'une machine synchrone de grandes dimensions; comme par exemple un générateur entraîné par des turbines hydrauliques ou à vapeur, **caractérisé en ce qu'**il comprend une étape consistant à appliquer un vernis isolant à poudre sur les spires (3), le vernis isolant pouvant supporter des températures atteignant 155°C.

2. Procédé selon la revendication 1, **caractérisé en ce que** les spires (3) sont espacées les unes des autres avant l'application du vernis isolant à poudre.

3. Procédé selon la revendication 2, **caractérisé en ce que** les spires (3) sont maintenues à une distance d'environ 3 cm les unes des autres par un peigne séparateur.

4. Procédé selon la revendication 1, **caractérisé en ce qu'**il comprend en outre une étape consistant à chauffer les spires (3) qui sont revêtues dudit vernis isolant, afin de les durcir.

5. Procédé selon la revendication 4, **caractérisé en ce que** la bobine (2) de pôle est introduite dans un dispositif chauffant.

6. Procédé selon la revendication 4, **caractérisé en ce que** la bobine (2) de pôle est chauffée par passage d'un courant électrique à travers ses spires (3).

7. Bobine (2) de pôle (1) de rotor d'une machine synchrone de grandes dimensions comme par exemple un générateur entraîné par des turbines hydrauliques ou à vapeur, **caractérisé en ce qu'**il comprend des spires (3) isolées en mettant en oeuvre le procédé défini dans l'une quelconque des revendications 1 à 6.
